# EUROPEAN PATENT APPLICATION

(11) **EP 2 738 899 A1**
(43) Date of publication of application: **04.06.2014**
(21) Application number: 12290419.6
(22) Date of filing: 29.11.2012
(51) Int. Cl.: H02J 3/00, H02J 3/14, H02J 3/32

(54) **A method for providing energy balancing**

(71) Applicant: Alcatel Lucent, 75007 Paris (FR)
(72) Inventor: Weigmann, Walter, 90765 Fürth (DE); Templ, Wolfgang, 74372 Sersheim (DE)
(74) Representative: Louis Pöhlau Lohrentz

(57) **Abstract**

The present invention relates to a method for providing energy balancing in an electrical energy network (1), the method comprising the steps of collecting information about localisation, destination, destination time, energy demands and/or storage capacities of one or more mobile units (2) located in a determined area (3) and calculating a forecast about an expected overall energy demand and/or energy storage capacity of the one or more mobile units (2), in particular electrical vehicles, within the determined area (3). Furthermore, the present invention relates to a control unit for providing energy balancing in an electrical energy network (1), the control unit is adapted to collect information about energy demands and/or storage capacities of one or more mobile units (2) located in a determined area (3) and to calculate a forecast about an expected overall energy demand and/or energy storage capacity of the one or more mobile units (2), in particular electrical vehicles, within the determined area (3). Furthermore, the present invention relates to a computer program product adapted to execute a method for providing energy balancing in an electrical energy network (1), when executed on a computer.

## Description

### Field of the invention

The present invention is situated in the field of electrical energy networks and relates more specifically to balancing the energy demand caused by and energy supply provided by mobile units within an electrical energy network.

### Background of the invention

Nowadays, an electrical energy network is usually divided into electrical energy sub-networks, to which energy is delivered according to a forecast of the energy demand within the areas covered by the respective sub-networks. For determined areas covered by the respective sub-networks a virtual account is provided in which data such as electrical energy demand and supply is presented. More specifically, such a virtual account contains data about the expected energy demand within a determined area, the energy delivered by an energy trader and the amount of the energy actually used or consumed at a specific moment, in particular by local consumers. If the amounts of energy actually requested for consumption within a determined area determined at a specific moment differ from the amounts of energy according to the forecast, the difference amount of missing energy may be delivered as a supplement by the energy trader or from one or more other areas, where there is a surplus of energy at the specific moment, because the therein delivered energy exceeds the expected energy demand within these areas.

The forecasts about energy demand are conventionally based on data about locally static energy consuming and/or energy supplying units, with other words consumers such as houses of consumers, fabrics etc. or static energy suppliers and providers such as energy fabrics (coal, wind energy etc.), which are locally placed at a fixed place within a determined area.

### Summary of the invention

The objective of the invention is to provide an improvement for electrical energy networks, in particular for the forecast of the energy demand and supply in energy networks.

The objective of the invention is achieved by a method for providing energy balancing in an electrical energy network, the method comprising the steps of collecting information about energy demands and/or storage capacities of one or more mobile units located in a determined area and calculating a forecast about an expected overall energy demand and/or energy storage capacity of the one or more mobile units, in particular electrical vehicles, within the determined area. The information about the energy demand of the one or more mobile units might be in particular based on collected information about destination and calculated or planned time of charging and/or consuming electrical energy by these one or more mobile units. The objective of the invention is further achieved by a control unit for providing energy balancing in an electrical energy network and a computer program product adapted to execute the methods of embodiments of the present invention, when executed on a computer. The control unit is adapted to collect information about energy demands and/or storage capacities of one or more mobile units located in a determined area and to calculate a forecast about an expected overall energy demand and/or energy storage capacity of the one or more mobile units, in particular electrical vehicles, within the determined area.

The present invention advantageously enables a better balancing of the energy demand of an energy network in which mobile units consume and eventually also supply electrical energy by improving the forecast of the energy demand and supply of these mobile units. In the following, these mobile units are termed likewise mobile electrical units, mobile (electrical) energy units or in short mobile units. Mobile energy units are in particular electrical vehicles, this means cars, busses and similar vehicles driven by electrical energy - exclusively or in combination with conventional energy such as petrol etc. - with other words electrical vehicles in the narrow sense, which could be termed as pure electrical vehicles, or hybrid vehicles. In a more general sense, mobile electrical units might be any movable or transportable device which consumes and/or stores by their storing means, in particular batteries, electrical energy.

The control unit may be implemented as a single unit, a stand-alone device, or within a database, integrated in a computer and/or within a computer network. The control unit may be implemented through the use of hardware, software and/or hardware capable of executing software in association with appropriate software.

More specifically, the control unit can be comprised or implemented by circuit-based processes, including possible implementation as a single integrated circuit, such as an ASIC (= Application Specific integrated Circuit) or such as an FPGA (= Field Programmable Gate Array), a multi-chip module, a single card, or a multi-card circuit pack. The functions of control unit may be implemented as processing blocks in a software program. Such software may be employed in a digital signal processor, micro-controller, or general-purpose computer implemented as a single device or integrated in a computer network.

The control unit may comprise program code embodied in tangible media, such as magnetic recording media, optical recording media, solid state memory, floppy diskettes, CC-RONis, hard drives, or any other machine-readable storage medium, wherein, when the program code is loaded into and executed in the control unit, the control unit becomes an apparatus used for practicing the invention.

Further advantages are achieved by embodiments of the dependent claims.

In a preferred embodiment, the delivering of electrical energy to one or more electrical energy sub-networks within the determined area is controlled by means of the calculated forecast. In particular, a request message is sent to a server of an energy trader and the delivering of energy is requested according to the calculated forecast.

In a preferred embodiment, each of the one or more electrical energy sub-networks is an energy distribution grid, a balancing area of the electrical energy network comprising one or more energy distribution grids or a control area of the electrical energy network comprising a plurality of balancing areas of the electrical energy network.

In a preferred embodiment, the electrical energy is delivered to the one or more electrical energy sub-networks within the determined area based on the calculated forecast.

In a preferred embodiment, for collecting information about energy demands and/or storage capacities of one or more mobile units located in a determined area, one or more messages are sent by the one or more mobile units when checking in to a determined area and/or one or more messages are receipt from the one or more mobile units, when the respective mobile unit checks in to the determined area.

In a preferred embodiment, the one or more messages comprise information about the time of arrival of the one or more mobile units into the determined area, energy storage capacities of the one or more mobile units, energy demand of the one or more mobile units and amount of energy supply provided by the one or more mobile units.

In a preferred embodiment, one or more messages are sent by the one or more mobile units when checking out of a determined area and/or one or more messages are receipt from the one or more mobile units, when the respective mobile unit checks out of the determined area.

In a preferred embodiment, the one or more messages comprise information about time of arrival of the one or more mobile units into a second determined area, energy storage capacities of the one or more mobile units and energy demand and amount of energy supply provided by the one or more mobile units.

In a preferred embodiment, the one or more mobile units, when moving within a determined area, sent information about the time of leaving the determined area, information about energy storage capacities of the one or more mobile units and information about the energy demand and energy supply provided by the one or more mobile units and/or corresponding information is receipt from the one or more mobile units, when moving within a determined area, this is information about the time of leaving the determined area, information about energy storage capacities of the one or more mobile units and information about the energy demand and energy supply provided by the one or more mobile units.

In a preferred embodiment, information about the position of the one or more mobile units, information about the time of leaving of the one or more mobile units out of the determined area, information about the time of arrival of the one or more mobile units into a second determined area, information about energy storage capacities of the one or more mobile units and energy demand, amount of energy supply provided by the one or more mobile units and/or data about weather forecasts and customer usage patterns is collected.

In a preferred embodiment, the whole or a part of the collected information is stored into a database associated with the determined area. Additionally or alternatively, the whole or a part of the collected information is transmitted to a database associated with a second determined area.

In a preferred embodiment, a forecast about an expected energy demand within the determined area is provided by calculating the expected amount of energy demand and energy supply of the one or more mobile units and by calculating deterministic and/or statistic movement profiles about the one or more mobile units.

In a preferred embodiment, controlling the delivering of electrical energy to a determined area, is achieved in particular by providing an operating reserve by a transmission network operator being responsible for providing a balance of energy within a control area and/or by providing compensation of energy between the balancing areas comprised by said control area by transferring a surplus of energy from balancing areas, where the energy delivered according to the calculated forecast exceeds the energy demand determined at a specific moment, to one or more balancing areas, where the energy demand determined at the specific moment exceeds the energy delivered according to the calculated forecast.

### Brief description of the figures:

A more comprehensive understanding of advantages of exemplary embodiments in accordance with the present invention will be provided by the following detailed description in which
- Fig. 1: depicts an overview of an energy network
- Fig. 2: depicts parts of an energy network
- Fig. 3: depicts steps of a method of providing energy balancing
- Fig. 4: depicts steps of a method of providing energy balancing
- Fig. 5: depicts steps of a method of providing energy balancing

### Description of embodiments

The following description of preferred embodiments is provided for illustrative purposes and not meant to limit the scope of the invention which is defined only by the claims.

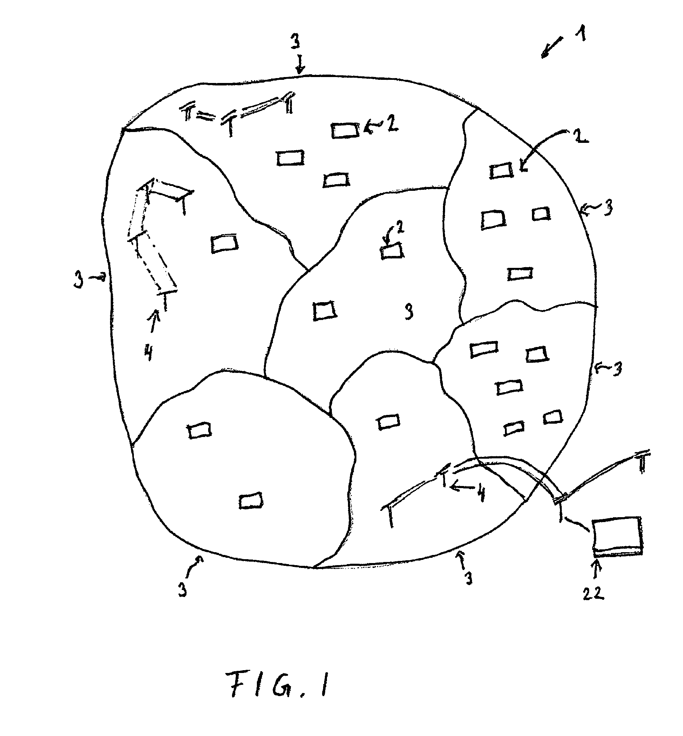

Fig. 1 depicts an overview of an electrical energy network 1, in which mobile units 2 are located. The electrical energy network 1 comprises one or more determined areas 3, in which one or more electrical sub-networks 4 are implemented. The one or more electrical sub-networks 4 are used to deliver and provide electrical energy within the respective determined area 3. The electrical energy is provided to electrical consumers, in particular to the mobile units 2 which may be for example electrical vehicles.

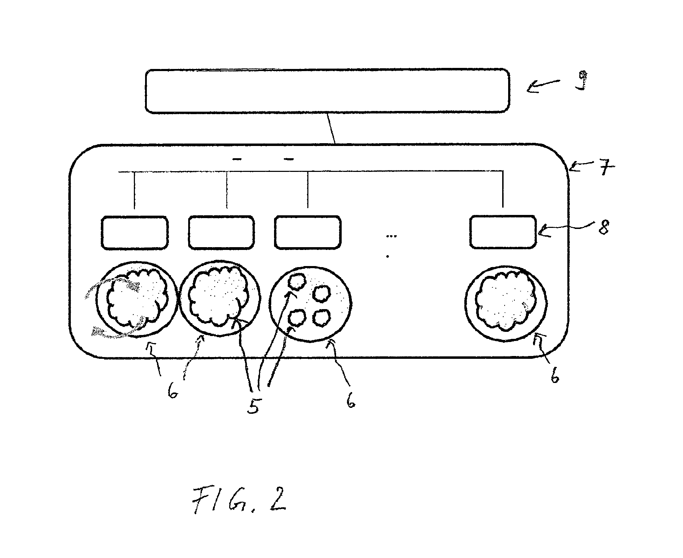

Each of the one or more electrical sub-networks 4 may be an energy distribution grid 5, or may be or be implemented within or as a balancing area 6 (see fig. 2) of the electrical energy network 1 comprising one or more energy distribution grids 5 or a control area 7 of the electrical energy network 1 comprising a plurality of balancing areas 6 of the electrical energy network 1. This means, the method of providing energy balancing in an energy network 1 may be implemented on each level of the electrical energy network 1. In particular, an electrical energy network 1 may be divided into one or more levels or sub-levels of parts or sub-networks of the electrical energy network 1 which may be named differently. However, the method of balancing energy may be implemented between any elements on the same level or of any level of sub-networks or determined areas whatever the nomination or implementation of the electrical energy network 1 may be. Therefore, the following used nomination and implementation of an exemplary energy network 1 is meant for illustrative purposes only.

To give an idea of the dimension, the exemplary electrical energy network 1 may be implemented for a whole country. Within the electrical energy network 1, four control areas 7 may be implemented each comprising about a dozen or some dozen of balancing areas 6 which comprise one or some, rather a singular digit number of, energy distribution grids 5. Such an energy distribution grid 5 may be for example implemented for the energy supply for a city or a small region on the country side. A balancing area 6 therefore may have the dimension of one big or two smaller cities or a medium-sized region in the rural area or a combination thereof.

One or some energy distribution grids 5 form a balancing area 6, as it is depicted in fig. 2. A person, this may be an energy trader or a city or a local public or private energy distributor, is responsible for a particular balancing area 6. This means, the person, which may preferably and in the following featured by and termed as a distribution network operator 8, is obliged to take care that the energy flow to and from the balancing area 6 and in particular to and from the energy distribution grids 5 within said particular balancing area 6 is well balanced. The distribution network operator 8 will for this reason calculate a forecast of the expected energy demand within said balancing area 6 and order energy from an energy trader, which accordingly will deliver the ordered energy. This calculation of needed energy has to take the mobile units 2 into account. As the number of the mobile units 2, which should be in the following electrical vehicle may be always changing due to their moving around within and in between the balancing areas 6 and the whole electrical energy network 1.

Furthermore, in particular, the energy consumption of electrical vehicles 2 may change considerably dependent on the day and time and even the season. Finally, the electrical vehicles 2 may also store electrical energy by means of their electrical battery or batteries and/or optionally further energy storage means (electrical-chemical or electrical-mechanical energy inversion and others) and transmit the stored energy back into the respective electrical energy grid. Therefore, the calculation and further implementation of the energy balancing has always to take the mobile units 2, in particular electrical vehicles 2, as moving electrical energy consumers and/or energy suppliers, namely by consuming and/or storing and back-feeding energy, into account.

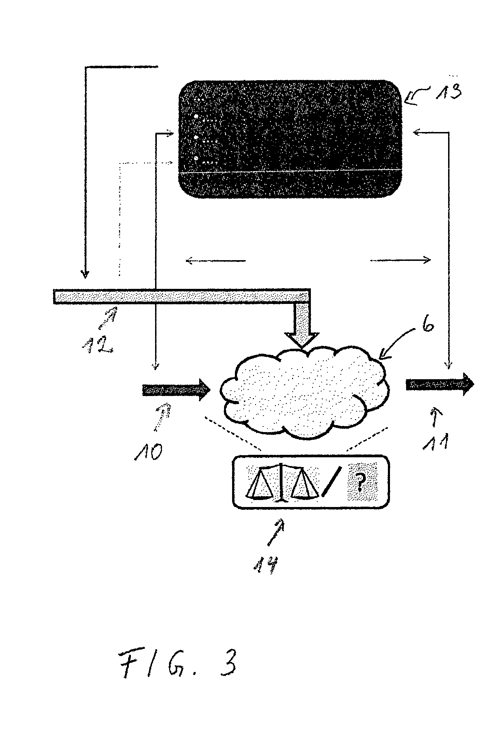

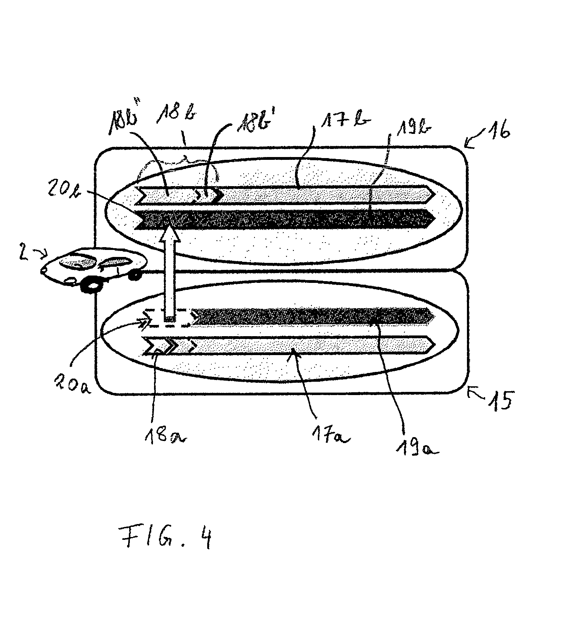

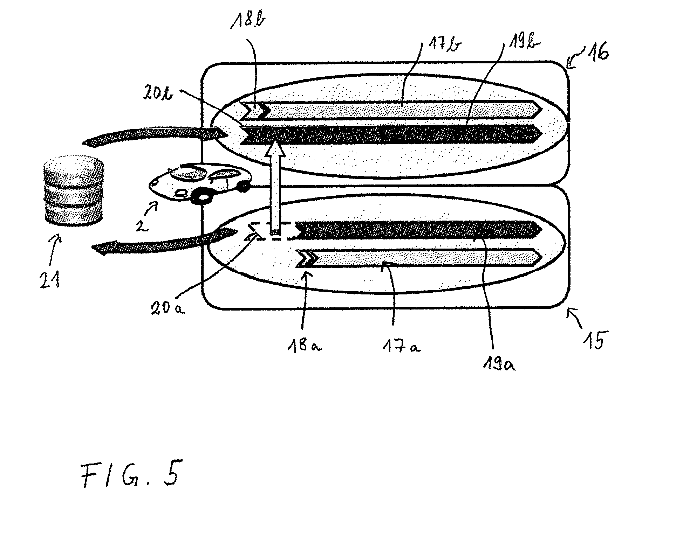

In Fig. 3, the delivering of the ordered energy by the energy trader to the balancing are 6 is symbolised by reference sign 10, whereas reference sign 11 indicates the energy flow from the balancing area 6, when the energy is taken out of this part of the energy network 1 by consumers. Reference sign 14 symbolising a balance already hints that for the balancing of the energy consumption within the balancing area 6, the number of the consumers (indicated by a question mark "?") must be known. Therefore, information of the electrical vehicles as energy consumers will be collected and stored into a database for further processing. In particular, the distribution network operator 8 who is responsible for a balancing area 6 (and/or the transmission network operator 9 who is responsible for a control area or in further implementation a person who is responsible for another determined area, in particular the whole energy network 1) has to know in particular how much energy will be consumed within the balancing area 6. In particular, the distribution network operator 8 or a further person responsible for a determined area might want to know the energy relevant behaviour, for example consumption (when, where, how much) and correspondingly energy storage and energy feed back into the grid of the electrical vehicles 2. In specific embodiments, this determination might be effected based on statistical determination based on the registration of the electrical vehicles 2 when checking in or out of a determined area. In specific embodiments, the energy demand might be determined based on the number of the individual vehicles and/or statistical overall calculation based on registration of the individual vehicles 2. It has to be noted that the term vehicle 2 is to be understand as a general term and refers to a plurality of electrical vehicles or mobile units in more general nomination likewise. The same applies for the vehicle 2 shown later in figs. 4 and 5. As already stated the knowledge about the energy relevant data within the energy network becomes more and more important in case the number of consumers is not stable, but varies importantly, in particular because of the moving consumers or mobile units, for example mobile electric vehicles driven primarily by electrical energy.

As already mentioned, according to this exemplary implementation and nomination, while a distribution network operator 6 is responsible for a balancing area 6, a transmission network operator 9 is responsible for the energy transport and energy provision on the level of a control area 7.

Fig. 2 depicts schematically a plurality of distribution network operators 8 each of whom being responsible for corresponding balancing areas 6 and the transmission network operator 9 who is responsible for the control area 7. The responsibility of the transmission network operator 9 may consist in particular to ascertain the energy transportation to the balancing areas 6 (for example from outside energy providers or energy traders or from within the control area 7) or to the energy distribution grids 5 comprised by the respective balancing areas 6 and between the balancing areas 6 within the control area 7 which comprises these balancing areas 6. Furthermore and in particular, the transmission network operator 9 is obliged to provide a reserve of energy in case the distribution network operator 8 needs a certain amount of energy, because the distribution network operator 8 did a wrong forecast about the needed energy within his balancing area 6 and has ordered too less energy from the energy trader so that the energy delivered from the energy trader, who might be identical or not with the transmission network operator 9, is not sufficient to satisfy the actual energy demand of the balancing area 6 for which the distribution network operator 8 is responsible. What is said for one distribution network operator 8 and one transmission network operator 9 applies accordingly for a respective plurality of responsible persons. This reserve of energy which the distribution network operator 8 may get from the transmission network operator 9 in case of wrong, too less, energy forecast, may be termed operating reserve. The operating reserve will be in particular used to satisfy the additional energy demand caused by the arrival of electrical vehicles arriving in a determined area 3 and consuming an additional and unexpected amount of energy which has not been expected. Of course, to reduce the need of making use of the operating reserve, the data related to the energy relevant behaviour (demand, storage, supply etc.) of the electrical vehicles will be collected in an accurate way to provide a quite precise forecast of the electrical energy demand within the balancing areas and the whole energy network.

Accordingly, the transmission network operator 9 may balance a surplus of energy of one or more balancing areas 6 with a too less of energy or insufficiency of energy of one or more other balancing areas 6 within his control area 7. This means, if in one balancing area 6, the respective distribution network operator 8, has ordered too much energy, and sells the exceeding amount to the transmission network operator 9, the transmission network operator 9 may deliver this or a part of this exceeding amount of energy to one or more other balancing areas 6, where the respective one or more distribution network operators 8, has or have ordered too less energy from the energy trader, so that accordingly the energy delivered from the energy trader is not enough to satisfy the energy demand within the respective balancing area or areas 6. This balancing by the transmission network operator 9, in particular by means of the operating reserve, is done because it is normally more appropriate, may be cheaper, more flexible as if the too much or too less of energy would be sold or bought to and from energy traders different in person from the transmission network operator. Of course, the best option is an accurate forecast of the expected energy demand, so that no further re-buy or re-sell is necessary. However, if the expected energy demand differs from the actual needed energy demand, in particular due to electrical vehicles moving to or leaving a determined area, the balance of energy by the transmission network operator is still more advantageous than the re-buying or re-selling of energy on the free market as there the prices might be less opportune, this means less or higher than with the transmission network operator.

Fig. 3 depicts in more detail the energy balanced support and consumption within and for a balancing area, to which energy is delivered 10 from an energy trader and consumed 11 by energy consumers. If the actual energy demand exceeds the expected energy consumption, the missing energy may be provided 12 by the transmission network operator 9 due to the operation reserve he held to this purpose.

To implement an accurate energy supply, data about the energy demand and consumption in particular of the electrical vehicles 2 may be collected into a virtual account 13. A virtual account may be provided for every level of the energy network 1, in particular for each of the balancing areas 6, for a control area 7 and even for an area comprising more than one control area 7, even for the whole energy network 1. By abstraction of the respective determined area to a virtual account, the corresponding virtual area which presents rather the data of the corresponding virtual account than the geographical area of a balancing area, control area etc., may be termed as an accounting grid. In preferred embodiments, an overall accounting grid is provided covering all accounting grids of the determined areas, in particular an accounting grid being virtual account covering each of the virtual accounts of the control areas.

Therefore, though the nomination and usage of the terms may be differing in the corresponding technical field, in this invention, an accounting grid is to be understood as a virtual account in which data in regard of the energy demand and supply of a respective geographical area, such as a balancing area 6, a control area 7, a distribution grid 5 or the whole energy network 1 of one or more countries and other energy relevant data in regard to the energy consumers, in particular the number, place and energy related behaviour of electrical vehicles 2, is provided. In particular, the data of the one or more accounting grids or virtual accounts are stored in one or more of the databases for the respective area or areas.

In fig. 3, the table referenced by 13, depicts such a virtual account symbolising the account in which data relevant to the energy supply and consumption in relation to a corresponding determined area 3 are put and which features likewise as the respective accounting grid for the determined area 3, e.g. on the level of a balancing area 6, a control area 7 etc. 19.

For providing that the energy in the electrical energy network 1 and in particular within and between the balancing areas 6 is well balanced, this means in particular that the energy supply is well adapted to the energy consumption, a forecast about the expected energy demand within each determined area 3, in particular within a balancing area 6 has to be established. Accordingly, the energy demand and consumption and further data relevant for the energy balance - as will be described in more detail below - within the one or more control areas 7 and the whole energy network may be calculated as a corresponding forecast.

As mobile units 2, for example electrical vehicles, and further transportable electrical devices, consuming energy are within the one or more balancing areas 6 and therefore within the one or more control areas 7 of the energy network and as these units, in particular electrical vehicles may also have energy storage capacities such as batteries which might need to be charged or discharged in these areas, the corresponding data has to be collected to achieve an accurate forecast of the energy consumption and energy demand.

Therefore, information about energy demands and/or storage capacities of the one or more mobile units 2 located in a determined area are collected, preferably together with the localisation data. Based on the collected data, a forecast about the expected energy demand and/or energy storage capacity of the one or more mobile units 2 within the determined area 3 is calculated. By this, the overall energy demand and/or or storage capacity for each determined area 3 and for the whole energy network 1 may be determined.

Figs. 4 and 5 depict in more detail, how the forecast of the energy demand within a determined area is effected in particular without (fig. 4) and with (fig. 5) the implementation of a database 21 in which the data about the energy demand caused by energy consumers, in particular mobile units, are stored for calculation of the forecast. The database 21 may be coupled or combined with the server 22 of an energy trader (see fig. 1) or may be implemented independently. While the server 22 of the energy trader is primarily used for the order and the processing of the delivering of energy by the energy trader, the database 21 is primarily used to store and eventually calculate data for the forecast of the energy balancing in the determined area(s). However, similarly as the database 21 may include or be coupled with the necessary processing means, the database 21 and the server 22 and the necessary processing means may be implemented as one single device or a plurality of linked or combined devices.

The two fields 15 and 16 in figs. 4 and 5 depict each a determined area out of the determined areas 3 (cf. fig. 1), for example a balancing area 6 to which an accounting grid as a virtual account in which the data of the energy demand is stored for calculation of the expected energy demand corresponds. As stated, in this exemplary embodiment, the two areas 15 and 16 are two balancing areas 6, but may in other scenarios also be control areas 7 or other determined areas 3 of the same or different level. The two determined areas, in this case balancing areas 15 and 16, may belong to the same control area 7 or to two different control areas 7. In this exemplary embodiment, the two balancing areas 15 and 16 may belong to different control areas 7. So, the balancing area 15 may belong to a first control area A and the balancing area 16 may belong to a second control area B. The database 21 may store every data relevant for the energy balance in the determined areas, the actual needed energy, the forecasted energy, data about energy providers and consumers of one or more determined areas, in particular the data in regard of the electrical vehicles, data about energy supplied etc.

In both figs. 4 and 5, a mobile unit, here an electrical vehicle 2, moves from and out of balancing area 15 of control area A to and into balancing area 16 of control area B. The horizontal flashes present the energy amounts of forecasted (17a, 17b) and actual (19a, 19b) energy demand and the operating reserve (18a, 18b) in balancing areas 15 and 16 influenced by the movement of the electrical vehicle 2 from balancing area 15 to balancing area 16, as it will be described in more detail in the following. As already mentioned, the depicted electrical vehicle 2 might and usually will represent a plurality of electrical vehicles, likewise.

At the beginning of the relevant scenario, the electrical vehicle 2 is situated within balancing area 15. As the location of the electrical vehicle 2 is known to the distribution network operator 8 responsible for balancing area 15, the distribution network operator responsible for balancing area 15 calculates a forecast of the energy demand 17a within balancing area 15. The forecasted energy demand is depicted as the field 17a in the lowest horizontal flash in fig. 4. The forecasted energy demand takes the energy demand of the electrical vehicle 2 into account. The flash 17a indicates the expected energy demand which corresponds to the energy ordered from the energy trader at a specific foregoing moment. The forecasted and ordered energy demand may - in a similar but slightly different scenario - cover the energy demand of the electrical vehicle 2 in total. In this case the length of the flash 17a would reach from the right sight to the ultimo left side. In the specific scenario depicted in fig. 4, the expected energy demand 17a did not in total take the whole energy demand of the electrical vehicle into account, because at the moment at which the energy demand had been calculated for the ordered energy, the demand of the electrical vehicle 2 had not yet been known exactly. Therefore, the expected forecasted energy demand 17a covers about the half of the energy demand 20a which is assigned for the electrical vehicle 2 and determined as soon as the data of the electrical vehicle 2 could be taken into account for precise calculation. For example, at the moment that the energy had been calculated for ordering, it was not known, how much energy the electrical vehicle 2 would demand according to the consumption which depends on the actual needed energy due to operating of the electrical vehicle 2. As soon as the energy demand 20a is known to the distribution network operator 8, he ordered an amount 18a of operating reserve to cover the rest of the energy demand 20a, which is not covered by the forecasted energy demand 17a yet. However, still at this moment, the distribution network operator 8, bases his calculation and ordering on the fact that he assumes that the electrical vehicle 2 will consume an amount of energy corresponding to the energy demand 20a within balancing area 15.

However, the electrical vehicle 2 now decides to move out of balancing area 15 into balancing area 16. Therefore, the amount of energy 20a is not more needed in balancing area 15. So, not only the forecasted and primarily ordered amount of energy 17a exceeds the now (after the leaving of the electrical vehicle 2) actually needed energy amount 19a, but the operating reserve 18a had been ordered in addition unnecessarily. Note again, in a more simple scenario, the distribution network operator 7 would not have ordered the operating reserve 18a, if the forecasted and ordered energy 17a would have covered all of the expected energy demand 19a including the expected energy demand 20a of the electrical vehicle, so that the flash 17a would have included the part 18a also.

Nevertheless and in either case, now that the electrical vehicle 2 had left the balancing area 15, the ordered energy exceeds the actually needed energy within balancing area 15. This exceeding part corresponding to the no more needed amount 20a in balancing area 15 comprises the part of ordered energy which had been ordered too much by the distribution network operator 8 because the forecasted amount 17a exceeds now the actual energy demand 19a and comprises additionally the operating reserve 18a which the distribution network operator 8 completely ordered in vain from the transmission network operator 9.

In contrast, in balancing area 16 the situation is now inverse, as due to the arrival of the electrical vehicle 2 in balancing area 16, which might plan or actually intends to charge its electrical storage, more energy is now needed as previously expected. The forecasted energy demand in balancing area 16 is depicted as the flash 17b (still fig. 4). According to the forecasted energy demand in balancing area 16, the distribution network operator 8 responsible for balancing area 16 had ordered an amount 17b from an energy trader at the moment of the calculation of the forecasted energy demand however not knowing about the arrival of the electrical vehicle 2 yet.

As now the previously not known situation arises that the electrical vehicle 2 appears into balancing area 16, it reveals that the actually needed energy 19b exceeds the energy forecast 17b. Therefore, the distribution network operator 8 responsible for balancing area 16 has to order more energy by making use of an operating reserve 18b ordered and delivered by the transmission network operator 9 responsible for control area B, to which the balancing area 16 belongs. As can be seen in fig. 4, only by means of the operating reserve 18b, the actual needed energy 19b in balancing area 16 is covered by the energy which is available due to the forecasted and ordered energy 17b and the post-ordered operating reserve 18b. The operating reserve 18b covers the part of the operating reserve 18b" which corresponds to the energy now needed by the electrical vehicle 2 in balancing area 16 and the part of the operating reserve 18b' which only would have been needed without the arriving of the electrical vehicle 2 into balancing area 16. It can been seen, that due to the arrival of the electrical vehicle 2 into balancing area 16, which in particular intends to charge its electrical storage means, much more operating reserve 18b is needed (18b" and 18b') because of the energy needed for the electrical vehicle (18b"); otherwise only the small part of the operating reserve 18b' would have been needed. In case the forecasted energy 17b would have corresponded to the actually needed energy 19b without regard of the electrical vehicle 2, no operating reserve 18b' would have been needed at all, so that when taking now the energy needed for the electrical vehicle 2, i.e. the energy amount 20b into account, the operating reserve 18b would have been caused only by the amount 18b" corresponding to the amount 20b for the electrical vehicle 2 now appearing in balancing area 16 causing the energy demand 20b. With other words, in the more simple scenario, that - without regard of the electrical vehicle 2 - the forecasted and ordered amount 17b corresponds to the actually needed energy amount 19b, and only because of the electrical vehicle 2 causing the energy demand 20b, an operating reserve 18b must now be ordered, the operating reserve 18b would correspond only to the amount 18b" as an amount 18b' would not be necessary.

In either case, due to the arrival of the electrical vehicle 2 into balancing area 16, an amount of operating reserve 18b is caused or at least enlarged. As the operating reserve 18b must be ordered and delivered from the transmission network operator 9, normally on short time, the price of the energy ordered in this way, is higher than the price of energy ordered and delivered based on the primary energy forecast 17b. This is, as the energy ordered according to the forecast 17b, can be ordered on long term, the distribution network operator 8 responsible for the balancing area 16 can look for a good price on the energy market and chose an energy trader with good conditions. As, in contrast, the operation reserve 18b must be ordered and provided by the transmission network operator 9 on short time, the effort for the transmission network operator 9 for provision of this operation reserve 18b is already higher and because of this and because of the fact, that the distribution network operator 7 has no more options to search long time for a cheaper price on the energy market, the energy price for the operating reserve 18b is much higher than for the energy ordered based on the forecast.

Therefore, to enhance the accuracy of the energy forecast and to limit the amount of the operating reserve 18 b needed to adapt the provided energy to the actually needed amount, the data of the moving units 2 are collected and stored into a database 21 which could be centralized or distributed and enables the access or at least better access to the data which are needed for calculating an accurate forecast of the needed energy. In preferred embodiments, the function of the database might be implemented by distributed databases and the data is transmitted between the database of a first determined area to a respective database of a second determined area.

In fig. 5, the implementation including a database 21 used to store the data for calculating the energy demand is depicted and in particular it is shown the influence on the amounts of energy forecasted and ordered based on the forecast or the energy ordered as additional operating reserve. Based on the data known at the moment of the ordering of the energy based on the forecast by the distribution network operator 8, the amount of energy 17a is calculated and accordingly ordered by the distribution network operator 8 responsible for balancing area 15 and delivered by an energy trader. As the actually needed energy 19a exceeds the energy delivered based on the forecast, a small amount 18a has to be ordered by the distributing network operator 8 responsible for the balancing area 15 from the transmission network operator 9 responsible for the control area A comprising the balancing area 15 which delivers the amount 18a as provided operating reserve 18a. This operating reserve 18a might be caused by energy consumers different from the electrical vehicle 2. The amount of energy 20a which corresponds to the energy demand of the electrical vehicle 2 has not to be ordered within balancing area 15, neither as forecasted energy demand 17a nor as operating reserve 18a, because it is known that the amount 20a is not more needed in balancing area 15, because the electrical vehicle 2 would leave balancing area 15. This is known, because the electrical vehicle 2 sent one or more messages in particular to the database 21 while being situated within balancing area 15, leaving balancing area 15 and arriving at balancing area 16. Therefore, already at the moment of the ordering of energy based on the forecast of the energy demand, the distribution network operator 7 responsible for balancing area 15 knows, that the electrical vehicle 2, which might still be located within balancing area 15, would leave balancing area 15, and would not more need the amount 20a of energy. Therefore, the forecasted energy 17a does not cover the amount 20a and the operating reserve 18a in balancing area 15 is caused by energy consumers different from the electrical vehicle 2 in balancing area 15 and is a rather small amount. This is, the forecast of needed energy within balancing area 15 has been quite accurate and only a small amount of needed operating reserve 18a has been necessary to adapt the provided energy to the forecasted energy. In other scenarios, the forecast of the needed energy might be so precise that even no operating reserve 18a at all is necessary. In other scenarios, the forecasted energy demand might exceed the actually needed energy and the surplus of energy might be sold on short term by the distribution network operator 8, eventually to an energy trader and/or to the transmission network operator 9. In either case, the accuracy of the forecast and therefore the need to order or sell a supplement or surplus of energy is diminished avoiding additional costs, because the price of energy bought or sold on short term is quite always less opportune, i.e. higher or lower, respectively, as if there is more time to arrange the buying or selling of energy by the energy distribution network operator 8.

Furthermore, in other more complex scenarios, the electrical vehicle might also supply energy into the energy grid of the respective area, because the electrical vehicle might have stored too much energy or more energy than actually needed and might be able to transmit a surplus of energy into balancing area 15 and 16. These information, besides other relevant data, such as deterministic or statistic movement profiles, position of the electrical vehicles 2, plan to leave and to arrive out of a first, second and following determined area, respectively, consumer habits, wish to receive or transmit energy from or to the grids, storage capacities etc. might be transmitted by one or more messages by the one or more electrical vehicles 2 amongst other consumers etc. to the database 21 for storage and calculation of the forecast of energy demand etc. This data amongst further relevant data transmitted to the database 21 such as weather forecast and customer usage patterns are stored and used for calculation of the energy demand of the determined area or areas and eventually for the whole energy network 1. In particular, deterministic and/or statistic movement profiles about the one or more electrical vehicles 2 might be calculated and stored for further processing.

As it can be seen in fig. 5, the forecast of the needed energy 17a and 17b is more accurate as in the scenario in fig. 4, both for balancing area 15 from which the electrical vehicle 2 is leaving and for balancing area 16 into which the electrical vehicle 2 is moving and when charging causing the corresponding energy demand 20b in balancing area 16, because of the data - in regard to the arrival and the energy needed by electrical vehicle 2 in balancing area 16 - collected in database 21. Because of the data collected in database 21, the forecast of the energy needed in balancing area 16 could take the energy needed by electrical vehicle 2 into account, so that, if ever, for the mobile units or for further energy consumers of balancing area 16 only a small amount of electrical energy 18b has to be ordered by means of the operating reserve 18b, because the forecast of the energy demand gave a quite accurate estimate of the energy demand thus reducing costs and effort.

In particular, as the transmission network operator 9 responsible for the control area B to which the balancing area 16 belongs must only deliver a small amount of energy 18b by means of his operating reserve, the cost of the energy supply is diminished and the price of the energy finally provided to the end user could be reduced in the end.

It has to be appreciated that a manifold of combinations and variations to the exemplary embodiment could occur, amongst others the case that the transmission network operator 9 responsible for balancing area A is also responsible for balancing area B, because both balancing areas belong to the same control area. In particular, a centralized or distributed database might be provided for a determined area covering several control areas, such as in the above case control areas A and B, or only one control area, or all control areas of the energy network or even an area comprising more than one energy network. This means the implementation might be realized on every granularity or level of energy network or networks.

## Claims

1. A method for providing energy balancing in an electrical energy network (1), the method comprising the steps of:
- collecting information about energy demands and/or storage capacities of one or more mobile units (2) located in a determined area (3, 15, 16); and
- calculating a forecast about an expected overall energy demand and/or energy storage capacity of the one or more mobile units (2), in particular electrical vehicles, within the determined area (3, 15, 16).

2. The method according to claim 1, wherein the method further comprises the step of:
- controlling the delivering of electrical energy to one or more electrical energy sub-networks (4) within the determined area (3, 15, 16) by means of the calculated forecast, wherein this step in particular comprises the step of sending a request message to a server (22) of an energy trader, requesting the delivering of energy according to the calculated forecast.

3. The method according to claim 2, wherein each of the one or more electrical energy sub-networks (4) is an energy distribution grid (5), a balancing area (6) of the electrical energy network (1) comprising one or more energy distribution grids (5) or a control area (7) of the electrical energy network (1) comprising a plurality of balancing areas (6) of the electrical energy network (1).

4. The method according to claim 1, wherein the method further comprises the step of:
- delivering of electrical energy to the one or more electrical energy sub-networks (4) within the determined area (3, 15, 16) based on the calculated forecast.

5. The method according to claim 1, wherein the step of collecting information about energy demands and/or storage capacities of one or more mobile units (2) located in a determined area (3, 15, 16) comprises:
- sending one or more messages by the one or more mobile units (2) when checking in to a determined area (3, 15, 16) and/or receiving one or more messages from the one or more mobile units (2), when the respective mobile unit (2) checks in to the determined area (3, 15, 16).

6. The method according to claim 5, wherein the one or more messages comprising information about the time of arrival of the one or more mobile units (2) into the determined area (3, 15, 16), energy storage capacities of the one or more mobile units (2), energy demand of the one or more mobile units (2) and amount of energy supply provided by the one or more mobile units (2).

7. The method according to claim 1, wherein the step of collecting information about energy demands and/or storage capacities of one or more mobile units (2) located in a determined area (3, 15) comprises:
- sending one or more messages by the one or more mobile units (2) when checking out of a determined area (3, 15) and/or receiving one or more messages from the one or more mobile units (2), when the respective mobile unit (2) checks out of the determined area (3, 15).

8. The method according to claim 7, wherein the one or more messages comprising information about time of arrival of the one or more mobile units (2) into a second determined area (3, 16), energy storage capacities of the one or more mobile units (2) and energy demand and amount of energy supply provided by the one or more mobile units (2).

9. The method according to claim 1, wherein the step of collecting information about energy demands and/or storage capacities of one or more mobile units (2) located in a determined area (3, 15, 16) comprises:
- sending by the one or more mobile units (2), when moving within a determined area (3, 15), information about the time of leaving the determined area (3, 15), information about energy storage capacities of the one or more mobile units (2) and information about the energy demand and energy supply provided by the one or more mobile units (2) and/or receiving from the one or more mobile units (2), when moving within a determined area (3, 15), information about the time of leaving the determined area (3, 15), information about energy storage capacities of the one or more mobile units (2) and information about the energy demand and energy supply provided by the one or more mobile units (2).

10. The method according to claim 1, wherein the step of collecting information about energy demands and/or storage capacities of one or more mobile units (2) located in a determined area (3, 15, 16) comprises:
- collecting information about position of the one or more mobile units (2), information about the time of leaving of the one or more mobile units (2) out of the determined area (3, 15), information about the time of arrival of the one or more mobile units (2) into a second determined area (3, 16), information about energy storage capacities of the one or more mobile units (2) and energy demand, amount of energy supply provided by the one or more mobile units (2) and/or data about weather forecasts and customer usage patterns.

11. The method according to claim 10, wherein the method further comprises the step of storing whole or a part of the collected information into a database (21) associated with the determined area (3, 15) and/or transmitting whole or a part of the collected information to a database (21) associated with a second determined area (3, 16).

12. The method according to claim 1, wherein the step of calculating a forecast about an expected energy demand within the determined area (3, 15, 16) comprises:
- calculating the expected amount of energy demand and energy supply of the one or more mobile units (2); and
- calculating deterministic and/or statistic movement profiles about the one or more mobile units (2).

13. The method according to claim 1, wherein the step of controlling the delivering of electrical energy to a determined area (3, 15, 16), further comprises:
- providing an operating reserve (12) by a transmission network operator (9) being responsible for providing a balance of energy within a control area (7); and
- providing compensation of energy between the balancing areas (6) comprised by said control area (7) by transferring a surplus of energy from balancing areas (6), where the energy delivered according to the calculated forecast exceeds the energy demand determined at a specific moment, to one or more balancing areas (6), where the energy demand determined at the specific moment exceeds the energy delivered according to the calculated forecast.

14. A control unit for providing energy balancing in an electrical energy network (1), the control unit is adapted to collect information about energy demands and/or storage capacities of one or more mobile units (2) located in a determined area (3, 15, 16); and to calculate a forecast about an expected overall energy demand and/or energy storage capacity of the one or more mobile units (2), in particular electrical vehicles, within the determined area (3, 15, 16).

15. A computer program product adapted to execute the method of one of the claims 1 to 14, when executed on a computer.
